# EUROPÄISCHE PATENTSCHRIFT

(11) **EP 2 193 286 B1**
(45) Veröffentlichungstag und Bekanntmachung des Hinweises auf die Patenterteilung: **28.12.2011**
(21) Anmeldenummer: 08801329.7
(22) Anmeldetag: 12.09.2008
(51) Int. Cl.: F16H 25/20

(54) **MOTORISCHER SPINDELANTRIEB MIT ÜBERLASTSCHUTZ**
MOTORIZED SPINDLE DRIVE WITH OVERLOAD PROTECTION
SYSTÈME D'ENTRAÎNEMENT À MOTEUR D'UNE BROCHE À SÉCURITÉ ANTI-SURCHARGE

(30) Priorität: 27.09.2007 DE 102007046583
(43) Veröffentlichungstag der Anmeldung: 09.06.2010
(73) Patentinhaber: EADS Deutschland GmbH, 85521 Ottobrunn (DE)
(72) Erfinder: JÄNKER, Peter, 85521 Riemerling (DE)
(74) Vertreter: Kopf, Korbinian Paul
(86) Internationale Anmeldenummer: PCT/DE2008/001537
(87) Internationale Veröffentlichungsnummer: WO 2009/039831

(56) Entgegenhaltungen:
- EP-A- 1 793 477
- DE-A1- 10 335 694
- US-A1- 2007 145 806

## Beschreibung

Die Erfindung betrifft einen motorischen Spindelantrieb für einen Stellantrieb, insbesondere für eine aerodynamisch wirksame Fläche eines Luftfahrzeugs, gemäß dem Oberbegriff des Anspruchs 1.

EP 1 793 477 A offenbart einen motorischen Spindelantrieb gemäß dem Oberbegriff des Anspruchs 1, und beschreibt einen fehlertoleranten elektromechanischen Aktuator mit Drehmomentsensor- und Steuerungssystem.

Aus Gründen der Betriebssicherheit werden für Stellsysteme von Flugzeugen vorgesehene Stellantriebe, wie Stellantriebe für Steuerflächen, Trimmflächen und Hochauftriebsflächen redundant ausgelegt, was insbesondere für der primären Flugsteuerung dienende Stellantriebe von Bedeutung ist. Eine redundante mechanische parallele Anordnung von Stellantrieben setzt voraus, dass im Fehlerfall der eine, defekte Antrieb den zweiten nicht behindern darf und insbesondere nicht klemmt, so dass die Stellarbeit von dem intakten, zweiten Antrieb geleistet werden kann. Nach dem heutigen Stand der Technik werden insbesondere hydraulische Stellantriebe zu diesem Zweck eingesetzt.

Für ein sogenanntes allelektrisches Flugzeug (all-electric-aircraft), bei dem die besagten Stellsysteme elektromotorisch betätigt werden, sind nach dem heutigen Stand der Technik nur aufwendige Systeme, wie elektro-hydrostatische Antriebe, zur Verwirklichung solcher klemmfreier redundanter Antriebe geeignet. Einfach aufgebaute herkömmliche elektromotorische Spindelantriebe sind hierzu nicht geeignet, da ein Klemmen der Antriebseinheit nicht mit Sicherheit auszuschließen ist. Beispielsweise bei einem mechanischen Bruch von Bauteilen, etwa einer Kugel in einem Kugelspindelmechanismus des Spindelantriebs, können Spindelmutter und Spindelgewinde gegeneinander klemmen und den Antrieb blockieren, mit den entsprechenden nachteiligen bis ggf. verheerenden Folgen.

Aufgabe der Erfindung ist es, einen einfach aufgebauten motorischen Spindelantrieb zu schaffen, der einen klemmfreien Betrieb sicherstellt. Ein solcher motorischer Spindelantrieb soll insbesondere für eine redundante Anordnung geeignet sein.

Die Aufgabe wird durch einen motorischen Spindelantrieb mit den Merkmalen des Anspruchs 1 gelöst.

Durch die Erfindung wird ein motorischer Spindelantrieb für einen Stellantrieb, insbesondere für eine aerodynamisch wirksame Fläche eines Luftfahrzeugs geschaffen, mit einer Spindel und einem Motor, der ein in die Spindel zu deren Antrieb eingreifendes, eine Relativbewegung in axialer Richtung zwischen der Spindel und dem Motor bewirkendes mechanisches Getriebeelement aufweist und an einem das Drehmoment des Motors aufnehmenden, bezüglich der Spindelbewegung ortsfesten Element gelagert ist. Erfindungsgemäß ist es vorgesehen, dass die das Drehmoment des Motors aufnehmende Lagerung eine lösbare Kupplung umfasst, die bei Überschreiten eines vorgegebenen Drehmoments auslöst und den Motor im Sinne einer freien Bewegung in Axialrichtung der Spindel gegenüber dem ortsfesten Element freigibt.

Vorteilhafte Ausführungsformen und Weiterbildungen des erfindungsgemäßen motorischen Spindelantriebs sind in den Unteransprüchen angegeben.

Gemäß einer Ausführungsform der Erfindung ist es vorgesehen, dass die lösbare Kupplung zwei gegeneinander bewegliche Elemente enthält, die in einer ersten Position formschlüssig ineinander eingreifend gegeneinander verriegelt sind, um das Drehmoment des Motors zu übertragen und die Relativbewegung der Spindel zu bewirken, und die in einer zweiten Position im Sinne einer Freigabe der Bewegung des Motors in Axialrichtung der Spindel gegeneinander entriegelt sind, und ferner auf das vom Motor übertragene Drehmoment ansprechende Mittel umfasst, die bei Überschreiten des vorgegebenen Drehmoments eine Bewegung der gegeneinander beweglichen Elemente aus der ersten Position in die zweite Position freigeben.

Gemäß einer Ausführungsform der Erfindung ist es vorgesehen, dass die zwei gegeneinander beweglichen Elemente ein Halteelement mit einem Ausschnitt, in welchem der Motor zumindest über einen vorgegebenen Winkelbereich um die Spindelachse drehbar ist, und mindestens ein Klinkenelement enthalten, das am Motor vorgesehen und in einer jeweiligen entsprechenden in dem Halteelement ausgebildeten Ausnehmung in Umfangsrichtung beweglich und über einen ersten Teil des vorgegebenen Winkelbereichs im Sinne der gegenseitigen Verriegelung bezüglich der Axialrichtung festgelegt geführt ist, wobei die im Halteelement ausgebildete Ausnehmung eine durch eine Aussparung gebildete Ausrastposition aufweist, in welcher das Klinkenelement in Axialrichtung freigebbar ist.

Gemäß einer Ausführungsform der Erfindung ist es vorgesehen, dass die bei Überschreiten des vorgegebenen Drehmoments die Bewegung der gegeneinander beweglichen Elemente aus der ersten Position in die zweite Position freigebenden Mittel durch eine zwischen den gegeneinander beweglichen Elementen wirksame Rutschkupplung gebildet sind.

Gemäß einer anderen Ausführungsform der Erfindung ist es vorgesehen, dass die bei Überschreiten des vorgegebenen Drehmoments die Bewegung der gegeneinander beweglichen Elemente aus der ersten Position in die zweite Position freigebenden Mittel durch ein zwischen den gegeneinander beweglichen Elementen wirksames elastisches Federelement gebildet sind.

Der Motor ist vorzugsweise ein Elektromotor.

Gemäß einer Ausführungsform der Erfindung ist es vorgesehen, dass das in die Spindel eingreifende Getriebeelement eine Spindelmutter ist, die zentrisch in einem Rotor des Motors angeordnet ist.

Gemäß einer Ausführungsform der Erfindung ist es vorgesehen, dass der Motor die Spindel konzentrisch zu deren Achse umgebend angeordnet ist.

Es kann eine lösbare Kupplung vorgesehen sein, die ein einziges in einer Ausnehmung geführtes Klinkenelement umfasst.

Andererseits kann eine lösbare Kupplung vorgesehen sein, die zwei oder mehr jeweils in einer Ausnehmung geführte Klinkenelemente umfasst, welche gegeneinander um gleiche oder unterschiedliche Winkel über den Umfang versetzt sind.

Im Folgenden wird ein Ausführungsbeispiel des erfindungsgemäßen motorischen Spindelantriebs anhand der Zeichnung erläutert.

Es zeigt:
- **Fig. 1**: eine schematisierte, geschnittene Teilansicht eines motorischen Spindelantriebs für einen Stellantrieb, insbesondere für eine aerodynamisch wirksame Fläche eines Luftfahrzeugs, gemäß einem Ausführungsbeispiel der Erfindung;
- **Fig. 2a)**: eine Ansicht in Richtung der in Fig. 1 gezeigten Spindel auf ein in dem motorischen Spindelantrieb vorgesehenes Halteelement gemäß einem Ausführungsbeispiel; und
- **Fig. 2b)**: eine Ansicht in Richtung der in Fig. 1 gezeigten Spindel auf ein in dem motorischen Spindelantrieb vorgesehenes Halteelement gemäß einem anderen Ausführungsbeispiel.

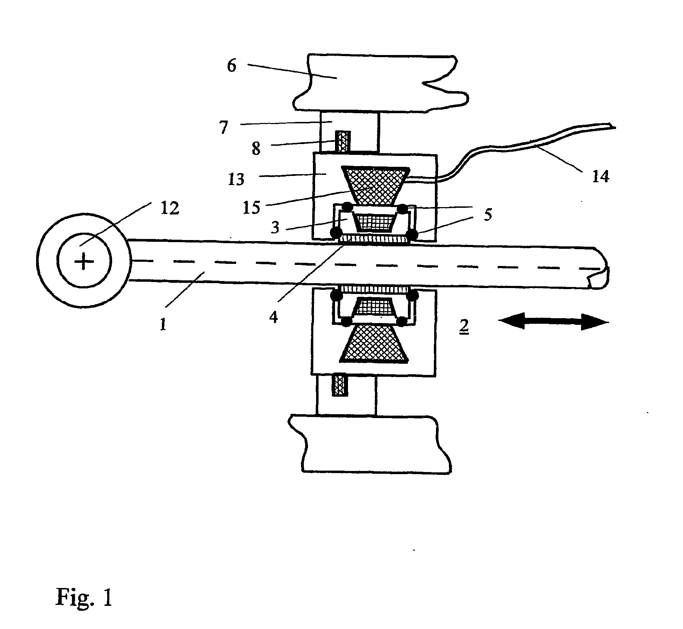

In Fig. 1 ist ein Teil eines motorischen Spindelantriebs für einen Stellantrieb dargestellt, welcher zum Antrieb einer aerodynamisch wirksamen Fläche eines Luftfahrzeugs, beispielsweise einer Steuer- oder Hochauftriebsfläche eines Flugzeugs vorgesehen ist.

Dieser motorische Spindelantrieb umfaßt eine Spindel 1, die an einem Ende, in Fig. 1 am linken Ende, ein Befestigungsauge 12 aufweist, an welchem eine Verbindung mit der zu verstellenden aerodynamisch wirksamen Fläche des Flugzeugs, die in der Figur nicht gezeigt ist, direkt oder über zwischengeschaltete, nicht gezeigte Komponenten, hergestellt wird. Andererseits ist der Spindelantrieb an einem bezüglich der Bewegung der Spindel 1 in deren Axialrichtung als ortsfest anzusehenden Bauteil oder Element 6 gelagert. Dieses Bauteil 6 kann beispielsweise ein Gehäuse des motorischen Spindelantriebs sein, welches seinerseits wiederum in einer beliebigen geeigneten Weise, fest oder beweglich, an der Struktur des Flugzeugs gelagert sein kann.

Der motorische Spindelantrieb umfaßt einen Motor 2, der ein in die Spindel 1 zu deren Antrieb eingreifendes mechanisches Getriebeelement 4 aufweist, das eine Relativbewegung zwischen der Spindel 1 und dem Motor 2 in axialer Richtung, d.h. in Richtung der Spindelachse, bewirkt. Der Motor 2 ist an einem dessen Drehmoment aufnehmenden Element gelagert, das bezüglich der Spindelbewegung ortsfest ist, nämlich an dem vorher genannten Bauteil oder Element 6, das z.B. in Form eines Gehäuse- oder Strukturbauteils eines Flugzeugs ausgebildet ist. Der Motor 2 umfasst einen Stator 13 mit einer Statorwicklung 15, die durch eine Leitung 14 mit Antriebsstrom versorgt wird, und einen Rotor 3, der gegenüber dem Stator 13 drehbar gelagert ist, um die Spindel 1 rotierend anzutreiben. Rotor 3 und Spindelmutter 4 sind durch Lager 5 gegenüber dem Stator 13 bzw. dem Gehäuse des Motors 2 gelagert.

Die das Drehmoment des Motors 2 aufnehmende Lagerung 6, 7, 8, 9 enthält eine lösbare Kupplung 7, 8, 9, die beim Überschreiten eines vorgegebenen Drehmoments auslöst und den Motor 2 im Sinne einer freien Bewegung in Axialrichtung der Spindel 1 gegenüber dem oben genannten ortsfesten Element 6 freigibt. Die besagte lösbare Kopplung 7, 8, 9 umfasst zwei gegeneinander bewegliche Elemente 7, 8, die in einer ersten Position formschlüssig ineinander eingreifen und gegeneinander verriegelt sind, so dass sie das Drehmoment des Motors 2 übertragen und die Relativbewegung der Spindel 1 gegenüber dem ortsfesten Element 6 bewirken, und die in einer zweiten Position gegeneinander in der Weise entriegelt sind, dass eine Freigabe der Bewegung des Motors 2 in Axialrichtung der Spindel 1 erfolgt.

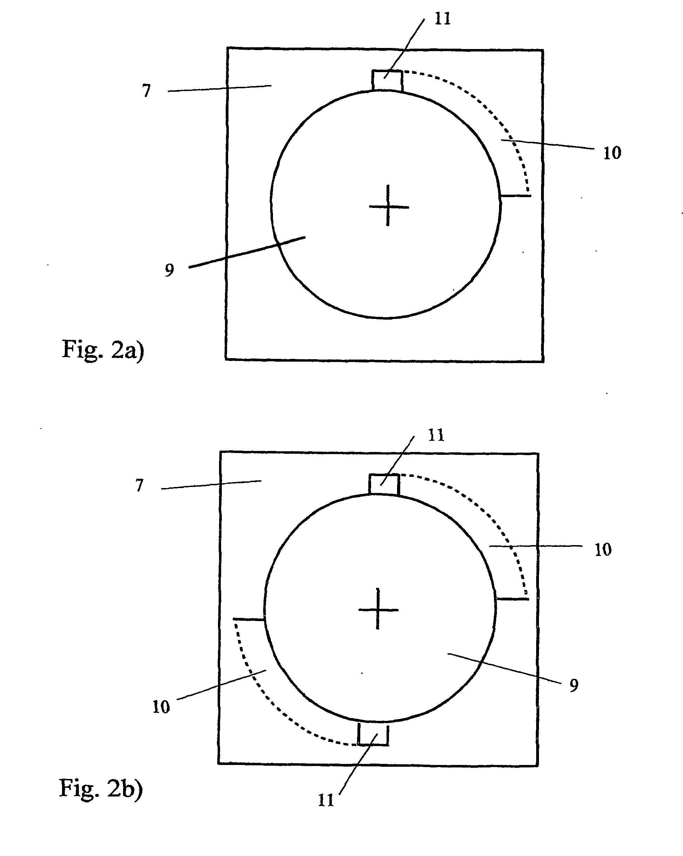

Bei den in den Figuren 1 und 2a) und b) dargestellten Ausführungsbeispielen sind diese beiden gegeneinander beweglichen Elemente 7, 8 gebildet durch einerseits ein Halteelement 7 mit einem Ausschnitt 9, in welchem der Motor 2 über einen vorgegebenen Winkelbereich um die Spindelachse verdrehbar ist, sowie durch andererseits mindestens ein Klinkenelement 8, das am Motor 2 vorgesehen und mit diesem fest verbunden ist und in einer entsprechenden jeweiligen, in dem Halteelement 7 ausgebildeten Ausnehmung 10 in Umfangsrichtung beweglich ist. Dazu ist die Ausnehmung 10 nach Art einer kreisringsektorförmigen Nut ausgebildet, in welcher das Klinkenelement 8 über den besagten Winkelbereich eine kreisförmige Bahn um die Spindelachse vollführen kann. Über einen ersten Teil des vorgesehenen Winkelbereichs ist das Klinkenelement 8 im Sinne einer gegenseitigen Verriegelung bezüglich der Axialrichtung festgelegt geführt. Weiterhin weist die in dem Halteelement 7 ausgebildete Ausnehmung 10 eine Aussparung 11 auf, welche eine Ausrastposition bildet, in welcher das Klinkenelement 8 in Axialrichtung freigegeben ist. Das heißt, bei einer Drehung des Klinkenelements 8 entlang der Ausnehmung 10 von einer verriegelten Position in die Ausrastposition 11 wird diese und damit der Motor 2 in Axialrichtung freigegeben, so dass der Motor 2 von dem bezüglich der Spindel 1 ortsfesten Element 6 freikommt.

Bei dem in Figur 2a) dargestellten Ausführungsbeispiel ist eine Kupplung vorgesehen, die ein einziges in einer Ausnehmung 10 geführtes Klinkenelement 8 umfasst, wobei der Motor 2 über einen vorgegebenen Winkelbereich um die Spindelachse drehbar ist.

Bei einem anderen, in Figur 2b) dargestellten Ausführungsbeispiel ist eine Kupplung vorgesehen, die zwei jeweils in einer Ausnehmung 10 geführte Klinkenelemente 8 umfasst, welche gegeneinander um einen vorgegeben Winkel über den Umfang versetzt sind, in Figur 2b) um 180°, wobei der Motor 2 wiederum über einen vorgegebenen Winkelbereich um die Spindelachse drehbar ist.

Wenn die Kupplung jeweils zwei oder mehrere jeweils ein in einer Ausnehmung 10 geführte Klinkenelemente 8 umfasst, die eine bessere Verteilung der an der durch die in einer Ausnehmung 10 geführten Klinkenelemente 8 gebildeten Kupplung auftretenden Kräfte bewirken, können diese um gleiche oder unterschiedliche Winkel über den Umfang versetzt sein, beispielsweise drei Elemente um 120° oder um drei verschiedene Winkel, die insgesamt 360° ergeben.

Die Freigabe der Bewegung der gegeneinander beweglichen Elemente 7, 8, also des Halteelements 7 und des oder der Klinkenelemente 8, aus der ersten Position in die zweite Position erfolgt bei Überschreiten des vorgegebenen Drehmoments durch geeignete Mittel. Bei den in den Figuren 1 und 2a) und b) gezeigten Ausführungsbeispielen ist dazu eine Rutschkupplung vorgesehen, welche zwischen den gegeneinander beweglichen Elementen 7, 8, also zwischen dem Halteelement 7 und dem Klinkenelement 8, wirksam ist. Diese Rutschkupplung kann auf verhältnismäßig einfache Weise zwischen der Oberfläche des Klinkenelements 8 und der Oberfläche der in dem Halteelement 7 ausgebildeten Ausnehmung 10 hergestellt sein, wobei wahlweise zur Beeinflussung der gegenseitigen Reibung an einem oder an beiden der besagten Elemente Beschichtungen der Oberfläche, Beläge oder ähnliches vorgesehen sein können, wie es bei Rutschkupplungen üblich ist.

Alternativ kann ein solches, bei Überschreiten des vorgegebenen Drehmoments die Bewegung der gegeneinander beweglichen Elemente 7, 8 freigebende Mittel auch durch ein elastisches Federelement gebildet sein, das zwischen dem Motor 2 und dem Halteelement 7 bzw. dem ortsfesten Element 6 wirksam ist. Ein solches Federelement müsste dann aber zumindest auf einer Seite lösbar sein, um eine vollständige Freigabe des Motors in Axialrichtung der Spindel 1 zu gewährleisten.

Damit ein redundanter Stellantrieb gewährleistet ist, sind vorzugsweise zwei oder mehr solche Spindelantriebe vorzusehen, von denen zumindest einer eine beim Überschreiten des vorgegebenen Drehmoments auslösende lösbare Kupplung 7, 8, 9 der beschriebenen oder einer ähnlichen Art umfasst, vorzugsweise aber beide. Dabei sind der oder die Motoren 2 der Spindelantriebe so ausgelegt, dass deren maximales Abtriebsmoment das maximale nominale Betriebsmoment der Elemente, welche von dem Spindelantrieb betätigt werden sollen, also beispielsweise der aerodynamisch wirksamen Flächen eines Flugzeugs, eindeutig übertrifft, beispielsweise um einen Faktor 2 oder höher. Im Falle des Klemmens des Motors 2 eines Antriebs muss der Motor des anderen Antriebs das vorgegebene Auslösemoment nur während der kurzen Auslösezeit der Kupplung 7, 8, 9 erzeugen, so dass die beiden gegeneinander beweglichen Elemente 7, 8 gegeneinander entriegelt werden und der Motor 2 freikommt.

Im Klemmfall wird somit durch geeignete Ansteuerung des Motors 2 ein Moment erzeugt, welches den Auslösewert der lösbaren Kupplung 7, 8, 9 übersteigt, wodurch der Stator 13 des Motors 2 in Umfangsrichtung über den o.g. vorgegebenen Winkelbereich bewegt und der Motor 2 dann in Axialrichtung der Spindel 1 freigegeben wird.

Der oder die Motoren 2 sind bei dem dargestellten Ausführungsbeispiel Elektromotoren, die einen Stator 13 und einen Rotor 3 aufweisen, wobei das in die Spindel 1 eingreifende Getriebeelement 4 durch eine Spindelmutter gebildet ist, die zentrisch im Rotor 3 angeordnet ist. Der Motor 2 ist also mit seinem Rotor 3 die Spindel 1 konzentrisch zu deren Achse umgebend angeordnet. Die Zuleitungen 14, welche die Wicklungen des Stators 13 versorgen, sind natürlich so vorzusehen, dass sie bei einer Freigabe des Motors 2 in Axialrichtung der Spindel 1 ohne Beschädigung folgen können.

Durch die Erfindung wird somit ein einfach bauender elektromotorischer Spindelantrieb geschaffen, der einen klemmfreien Betrieb sicherstellt.

### Bezugszeichenliste

- 1: Spindel
- 2: Motor
- 3: Rotor
- 4: Spindelmutter
- 5: Lagerung
- 6: ortsfestes Teil
- 7: Halteelement
- 8: Klinkenelement
- 9: Aussparung
- 10: Ausnehmung
- 11: Ausrastposition
- 12: Befestigungsauge
- 13: Stator
- 14: Statorleitungen

## Patentansprüche

1. Motorischer Spindelantrieb für einen Stellantrieb, insbesondere für eine aerodynamisch wirksame Fläche eines Luftfahrzeugs, mit einer Spindel (1) und einem Motor (2), der ein in die Spindel (1) zu deren Antrieb eingreifendes, eine Relativbewegung in axialer Richtung zwischen der Spindel und dem Motor (2) bewirkendes mechanisches Getriebeelement (4) aufweist und an einem das Drehmoment des Motors (2) aufnehmenden, bezüglich der Spindelbewegung ortsfesten Element (6) gelagert ist, **dadurch gekennzeichnet, dass**
die das Drehmoment des Motors (2) aufnehmende Lagerung (6, 7, 8, 9) eine lösbare Kupplung (7, 8, 9) enthält, die bei Überschreiten eines vorgegebenen Drehmoments auslöst und den Motor (2) im Sinne einer freien Bewegung in axialer Richtung der Spindel (1) gegenüber dem ortsfesten Element (6) freigibt.

2. Motorischer Spindelantrieb nach Anspruch 1, **dadurch gekennzeichnet, dass** die lösbare Kupplung (7, 8, 9) zwei gegeneinander bewegliche Elemente (7, 8) enthält, die in einer ersten Position formschlüssig ineinander eingreifend gegeneinander verriegelt sind, um das Drehmoment des Motors (2) zu übertragen und die Relativbewegung der Spindel (1) zu bewirken, und die in einer zweiten Position im Sinne einer Freigabe der Bewegung des Motors (2) in Axialrichtung der Spindel (1) gegeneinander entriegelt sind, wobei auf das vom Motor (2) übertragene Drehmoment ansprechende Mittel vorgesehen sind, die bei Überschreiten des vorgegebenen Drehmoments eine Bewegung der gegeneinander beweglichen Elemente (7, 8) aus der ersten Position in die zweite Position freigeben.

3. Motorischer Spindelantrieb nach Anspruch 2, **dadurch gekennzeichnet, dass** die zwei gegeneinander beweglichen Elemente (7, 8) ein Halteelement (7) mit einem Ausschnitt (9), in welchem der Motor (2) zumindest über einen vorgegebenen Winkelbereich um die Spindelachse drehbar ist, und mindestens ein Klinkenelement (8) enthalten, das am Motor (2) vorgesehen und in einer jeweiligen zugeordneten, in dem Halteelement (7) ausgebildeten Ausnehmung (10) in Umfangsrichtung beweglich und über einen ersten Teil des vorgegebenen Winkelbereichs im Sinne der gegenseitigen Verriegelung bezüglich der Axialrichtung festgelegt geführt ist, wobei die im Halteelement (7) ausgebildete Ausnehmung (10) eine durch eine Aussparung (11) gebildete Ausrastposition aufweist, in welcher das Klinkenelement (8) in Axialrichtung freigegeben ist.

4. Motorischer Spindelantrieb nach Anspruch 2 oder 3, **dadurch gekennzeichnet, dass** die bei Überschreiten des vorgegebenen Drehmoments die Bewegung der gegeneinander beweglichen Elemente (7, 8) aus der ersten Position in die zweite Position freigebenden Mittel durch eine zwischen den gegeneinander beweglichen Elementen (7, 8) wirksame Rutschkupplung gebildet sind.

5. Motorischer Spindelantrieb nach Anspruch 2 oder 3, **dadurch gekennzeichnet, dass** die bei Überschreiten des vorgegebenen Drehmoments die Bewegung der gegeneinander beweglichen Elemente (7, 8) aus der ersten Position in die zweite Position freigebenden Mittel durch ein zwischen den gegeneinander beweglichen Elementen (7, 8) wirksames elastisches Federelement gebildet sind.

6. Motorischer Spindelantrieb nach einem der Ansprüche 1 bis 5, **dadurch gekennzeichnet, dass** der Motor (2) ein Elektromotor ist.

7. Motorischer Spindelantrieb nach einem der Ansprüche 1 bis 6, **dadurch gekennzeichnet, dass** das in die Spindel (1) eingreifende Getriebeelement (4) eine Spindelmutter (4) ist, die zentrisch in einem Rotor (3) des Motors (2) angeordnet ist.

8. Motorischer Spindelantrieb nach Anspruch 7, **dadurch gekennzeichnet, dass** der Motor (2) die Spindel (1) konzentrisch zu deren Achse umgebend angeordnet ist.

9. Motorischer Spindelantrieb nach einem der Ansprüche 3 bis 8, **dadurch gekennzeichnet, dass** eine lösbare Kupplung (7, 8, 9) vorgesehen ist, die ein in einer Ausnehmung (10) geführtes Klinkenelement (8) umfasst.

10. Motorischer Spindelantrieb nach einem der Ansprüche 3 bis 8, **dadurch gekennzeichnet, dass** eine lösbare Kupplung (7, 8, 9) vorgesehen ist, die zwei oder mehr jeweils in einer Ausnehmung (10) geführte Klinkenelemente (8) umfasst, welche gegeneinander um gleiche oder unterschiedliche Winkel über den Umfang versetzt sind.

## Claims

1. A motorized spindle drive for an actuator, particularly for an aerodynamically effective surface of an aircraft, having a spindle (1) and a motor (2) that comprises a mechanical transmission element (4) engaging the spindle (1) in order to drive said spindle (1) and causing a relative movement in the axial direction between the spindle and the motor (2) and that is supported at an element (6) that is fixed in place relative to the motion of the spindle, **characterised in that** the bearing (6, 7, 8, 9) absorbing the torque of the motor (2) comprises a detachable coupling (7, 8, 9) that detaches upon a predetermined torque being exceeded and releases the motor (2) in the sense of a free movement in the axial direction of the spindle (1) relative to the fixed element (6).

2. The motorized spindle drive according to claim 1, **characterised in that** the detachable coupling (7, 8, 9) comprises two elements (7, 8) that are moveable relative to each other, which in a first position are locked against each other so as to be mutually engaging in a positive-locking manner in order to transmit the torque of the motor (2) and to cause the relative movement of the spindle (1), and which in a second position are unlocked from each other in the sense of a free movement of the motor (2) in the axial direction of the spindle (1), wherein means are provided that respond to the torque transmitted by the motor (2), which means, when the predetermined torque has been exceeded, release the elements (7, 8) that are moveable relative to each other to move from the first position to the second position.

3. The motorized spindle drive according to claim 2, **characterised in that** the two elements (7, 8) that are moveable relative to each other comprise a retaining element (7) with a cutout (9), in which the motor (2) is rotatable around the spindle axis at least over a predetermined angular range, and comprise at least one detent element (8) that is provided on the motor (2) and that in a respectively corresponding recess (10) in the retaining element (7) is movable in circumferential direction and is guided by way of a first part of the predetermined angular range in the sense of mutual locking in respect of the axial direction, wherein the recess (10) in the retaining element comprises a disengaging position that is formed by a notch (11), in which disengaging position the detent element (8) is released in axial direction.

4. The motorized spindle drive according to claim 2 or 3, **characterised in that** the elements (7, 8) which when the predetermined torque has been exceeded release the movement of the elements that are moveable relative to each other from the first position to the second position, are formed by a friction clutch that is effective between the elements (7, 8) that are moveable relative to each other.

5. The motorized spindle drive according to claim 2 or 3, **characterised in that** the elements (7, 8) which when the predetermined torque has been exceeded release the movement of the elements that are moveable relative to each other from the first position to the second position, are formed by an elastic spring element that is effective between the elements (7, 8) that are moveable relative to each other.

6. The motorized spindle drive according to any one of claims 1 to 5, **characterised in that** the motor (2) is an electric motor.

7. The motorized spindle drive according to any one of claims 1 to 6, **characterised in that** the transmission element (4) that engages the spindle (1) is a spindle nut (4) that is arranged centrically in a rotor (3) of the motor (2).

8. The motorized spindle drive according to claim 7, **characterised in that** the motor (2) is arranged so as to encompass the spindle concentrically to the axis thereof.

9. The motorized spindle drive according to any one of claims 3 to 8, **characterised in that** a detachable coupling (7, 8, 9) is provided that comprises a detent element (8) that is guided in a recess (10).

10. The motorized spindle drive according to any one of claims 3 to 8, **characterised in that** a detachable coupling (7, 8, 9) is provided that comprises two or more detent elements (8), each being guided in a recess (10), which detent elements are mutually offset by identical angles or different angles over the circumference.

## Revendications

1. Dispositif d'entraînement à broche motorisé pour un servomoteur, en particulier pour une surface active aérodynamique d'un aéronef, comprenant une broche (1) et un moteur (2), qui présente un élément de transmission (4) mécanique, s'engageant dans la broche (1) pour l'entraînement de cette dernière et provoquant un mouvement relatif dans la direction axiale entre la broche et le moteur (2), lequel moteur est monté sur un élément stationnaire (6) par rapport au mouvement de la broche, qui absorbe le couple du moteur (2), **caractérisé en ce que** le logement (6, 7, 8, 9), absorbant le couple du moteur (2), comporte un accouplement amovible (7, 8, 9), qui se désengage lors d'un dépassement par le haut d'un couple prédéfini et libère le moteur (2) dans le sens d'un libre déplacement dans la direction axiale de la broche (1) par rapport à l'élément stationnaire (6).

2. Dispositif d'entraînement à broche motorisé suivant la revendication 1, **caractérisé en ce que** l'accouplement amovible (7, 8, 9) comporte deux éléments (7, 8) mobiles l'un par rapport à l'autre, qui sont mutuellement verrouillés en s'engageant l'un dans l'autre par coopération de forme dans une première position, pour transmettre le couple du moteur (2) et provoquer le mouvement relatif de la broche (1), et sont mutuellement déverrouillés dans une seconde position dans le sens d'une libération du mouvement du moteur (2) dans la direction axiale de la broche (1), des moyens répondant au couple transmis par le moteur (2) étant prévus, lesquels moyens libèrent, lors d'un dépassement par le haut du couple prédéfini, un déplacement des éléments (7, 8), mobiles l'un par rapport à l'autre, de la première position dans la seconde position.

3. Dispositif d'entraînement à broche motorisé suivant la revendication 2, **caractérisé en ce que** les deux éléments (7, 8) mobiles l'un par rapport à l'autre comportent un élément de retenue (7) avec une découpe (9), dans laquelle le moteur (2) peut tourner autour de l'axe de la broche au moins sur une plage angulaire prédéfinie, et au moins un élément à cliquet (8), qui est prévu sur le moteur (2), est mobile dans la direction périphérique dans un creux (10) respectif associé, réalisé dans l'élément de retenue (7), et est guidé de façon définie sur une première partie de la plage angulaire prédéfinie dans le sens du verrouillage mutuel par rapport à la direction axiale, le creux (10), réalisé dans l'élément de retenue (7), présentant une position de désencliquetage formée par un évidement (11), dans laquelle l'élément à cliquet (8) est libéré dans la direction axiale.

4. Dispositif d'entraînement à broche motorisé suivant l'une des revendications 2 et 3, **caractérisé en ce que** les moyens, libérant lors d'un dépassement par le haut du couple prédéfini le déplacement des éléments (7, 8), mobiles l'un par rapport à l'autre, de la première position dans la seconde position sont formés par un accouplement à friction actif entre les éléments (7, 8) mobiles l'un par rapport à l'autre.

5. Dispositif d'entraînement à broche motorisé suivant l'une des revendications 2 et 3, **caractérisé en ce que** les moyens, libérant lors d'un dépassement par le haut du couple prédéfini le déplacement des éléments (7, 8), mobiles l'un par rapport à l'autre, de la première position dans la seconde position sont formés par un élément à ressort élastique actif entre les éléments (7, 8) mobiles l'un par rapport à l'autre.

6. Dispositif d'entraînement à broche motorisé suivant l'une des revendications 1 à 5, **caractérisé en ce que** le moteur (2) est un moteur électrique.

7. Dispositif d'entraînement à broche motorisé suivant l'une des revendications 1 à 6, **caractérisé en ce que** l'élément de transmission (4), s'engageant dans la broche (1), est un écrou à broche disposé au centre d'un rotor (3) du moteur (2).

8. Dispositif d'entraînement à broche suivant la revendication 7, **caractérisé en ce que** le moteur (2) est disposé concentriquement à l'axe de la broche (1) en entourant cette dernière.

9. Dispositif d'entraînement à broche motorisé suivant l'une des revendications 3 à 8, **caractérisé en ce qu'**il est prévu un accouplement amovible (7, 8, 9), qui comprend un élément à cliquet (8) guidé dans un creux (10).

10. Dispositif d'entraînement à broche motorisé suivant l'une des revendications 3 à 8, **caractérisé en ce qu'**il est prévu un accouplement amovible (7, 8, 9), qui comprend deux éléments à cliquet (8), ou plus, guidés chacun dans un creux (10), lesquels éléments sont en déport mutuel périphérique d'angles égaux ou différents.
